(19) Europäisches Patentamt
European Patent Office
Office européen des brevets

(11) Veröffentlichungsnummer : **0 015 483**
**B1**

(12) # EUROPÄISCHE PATENTSCHRIFT

(45) Veröffentlichungstag der Patentschrift : **28.04.82**

(51) Int. Cl.³ : **C 07 F 9/38**, C 07 F 9/30

(21) Anmeldenummer : **80100945.7**

(22) Anmeldetag : **26.02.80**

(54) **Verfahren zur Herstellung von Phosphin- und Phosphonsäureanhydriden.**

(30) Priorität : **02.03.79 DE 2908264**

(43) Veröffentlichungstag der Anmeldung : **17.09.80 (Patentblatt 80/19)**

(45) Bekanntmachung des Hinweises auf die Patenterteilung : **28.04.82 Patentblatt 82/17**

(84) Benannte Vertragsstaaten : **AT BE CH DE FR GB IT NL**

(56) Entgegenhaltungen :
**US - A - 2 268 157**
**CHEMICAL ABSTRACTS, Band 78, Nr. 1 17, 30. April 1973, Zusammenfassung Nr. 111433y, Seite 497, Columbus, Ohio, US, M.B. GAZIZOV et al. : « Reaction of phosphorus (III) dichlorides with acetic anhydride in the presence of α-chloroesters »**
**CHEMICAL ABSTRACTS, Band 80, Nr. 1 9, 4. März 1974, Zusammenfassung Nr. 48105s, Seite 374, Columbus, Ohio, US, M.B. GAZIZOV et al. : « Reaction of phosphorus (III) dichlorides with acetic anhydride »**

(73) Patentinhaber : **HOECHST AKTIENGESELLSCHAFT**
**Postfach 80 03 20**
**D-6230 Frankfurt/Main 80 (DE)**

(72) Erfinder : **Dürsch, Walter, Dr.**
**In der Braubach 4**
**D-6240 Königstein/Taunus (DE)**
Erfinder : **Kleiner, Hans-Jerg, Dr.**
**Altkönigstrasse 11a**
**D-6242 Kronberg/Taunus (DE)**

**EP 0 015 483 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Verfahren zur Herstellung von Phosphin- und Phosphonsäureanhydriden

Es ist bereits bekannt, Phosphin- und Phosphonsäureanhydride durch Umsetzung von Phosphin- und Phosphonsäure-halogeniden mit molaren Mengen Wasser oder mit molaren Mengen von freien Phosphin- oder Phosphonsäuren herzustellen. Dieses Verfahren ist besonders in solchen Fällen von Bedeutung, wo die Halogenide leichter zugänglich sind als zum Beispiel die Ester oder die freien Säuren. Hierbei treten jedoch beträchtliche Mengen von gasförmigen Halogenwasserstoffen auf, die umständlich absorbiert und gegebenenfalls durch Neutralisation beseitigt werden müssen.

Es wurde nun ein vereinfachtes Verfahren — ausgehend von Phosphin- und Phosphonsäurehalogeniden — zur Herstellung von Phosphin- und Phosphonsäure-anhydriden der Formel

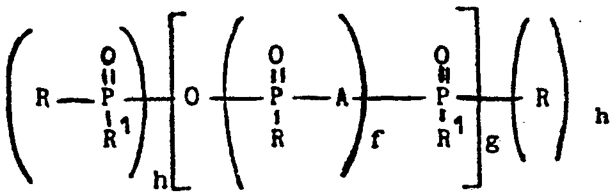
(I)

gefunden, wobei

A Alkylen, Aralkylen oder Arylen mit jeweils 1-10 C-Atomen

R $C_1$-$C_8$-Alkyl,

$R^1$ $C_1$-$C_{18}$-Alkyl oder Alkenyl, das durch Fluor, Chlor oder Brom substituiert und durch Äthersauerstoffatome unterbrochen sein kann ; Cycloalkyl oder Alkyl-cycloalkyl mit jeweils insgesamt 1-10 C-Atomen ; Aryl oder Alkylaryl, die im Ring durch Chlor und/oder Brom substituiert sein können ;

f = 0 oder 1, bevorzugt 0, stets 0, wenn h = 1 ;

g = 1, wenn h = 1 oder wenn h = 0, f = 1 und A = $C_3H_6$ sind,

g = 3 bis formal unendlich, wenn h und f = 0 und

g = 2 bis formal unendlich, wenn h = 0, f = 1 und A nicht $C_3H_6$ ist und

h = 0 oder 1, bevorzugt 0 bedeuten.

Diese Verbindungen werden erfindungsgemäß in der Weise erhalten, daß man ein Mol einer Verbindung der Formel

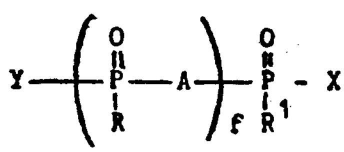
(II)

wobei X Chlor oder Brom, vorzugsweise Chlor bedeutet, Y die gleiche Bedeutung wie R hat und zusätzlich die gleiche Bedeutung wie X hat und R, $R^1$, A und f die gleichen Bedeutungen wie in der Formel I haben, mit mindestens b/2 Mol eines aliphatischen Carbonsäureanhydrides der Formel

$$(R^2—CO—)_2—O \qquad \text{(III)}$$

umsetzt, wobei b die Anzahl der Halogenatome in der Verbindung der Formel II und $R^2$ $C_1$-$C_3$-Alkyl, Chlormethyl, Dichlormethyl oder Trichlormethyl, bevorzugt $CH_3$ und $C_2H_5$, bedeutet, und die als Nebenprodukte entstehenden Carbonsäurehalogenide destillativ entfernt.

Die Erfindung richtet sich bevorzugt auf die Herstellung solcher Verbindungen der Formel I, wobei A $C_1$-$C_6$-Alkylen, Xylylen, Phenylen oder eine Gruppe der Formel

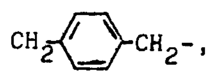

R $C_1$-$C_3$-Alkyl, $R^1$ $C_1$-$C_4$ Alkyl oder Alkenyl, insbesondere $C_1$-$C_3$-Alkyl, Phenyl oder Benzyl und f, g und h die oben genannten Bedeutungen haben.

Die für die Umsetzungen geeigneten Phosphin- und Phosphonsäure-halogenide der Formel II lassen sich in drei Gruppen einteilen.

1. Gruppe : Mono-phosphinsäure-halogenide der allgemeinen Formel $II_M$

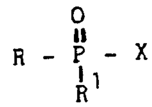

(II$_M$)

Hiervon seien z.B. erwähnt :

Tetradecyl-methyl-phosphinsäurechlorid, Di-n-octyl-phosphinsäurechlorid, Di-n-butyl-phosphinsäurechlorid, Di-i-propyl-phosphinsäurechlorid, Di-äthyl-phosphinsäurechlorid, und bevorzugt Methyl-propyl-phosphinsäurechlorid, Methyl-äthyl-phosphinsäurechlorid, Di-methyl-phosphinsäurechlorid, Methylvinyl-phosphinsäurechlorid, Methyl-chlormethyl-phosphinsäurechlorid.

2. Gruppe : 1, ω-Alkan-bis-(alkyl-phosphinsäure-halogenide) der allgemeinen Formel II$_B$

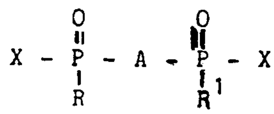

(II$_B$)

Hiervon seien z.B. erwähnt :

1,4-n-Butan-bis-(n-butyl-phosphonsäure-bromid), 1,6-n-Hexan-bis-(äthyl-phosphinsäure-chlorid), 1,8-n-Octan-bis-(n-propyl-phosphinsäure-chlorid), und bevorzugt alle Verbindungen der Formel II$_{B,b}$

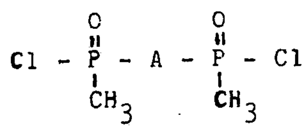

(II$_{B, b}$)

wobei A $C_1$-$C_{10}$ Alkylen bedeutet. Besonders bevorzugt sind Verbindungen, bei denen für A $CH_2$, $C_2H_4$ oder $C_6H_{12}$ stehen.

3. Gruppe : Phosphonsäure-halogenide der allgemeinen Formel II$_Z$

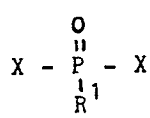

(II$_Z$)

Hiervon seien z.B. erwähnt :

Phenyl-methan-phosphonsäure-dibromid, Benzol-phosphonsäurechlorid, Cyclohexan-phosphonsäure-dichlorid, Hexadecan-phosphonsäure-dichlorid, Dodecan-phosphonsäure-dichlorid, n-Octan-phosphonsäure-dichlorid, n-Hexan-phosphonsäure-dichlorid, Isobutan-phosphonsäure-dichlorid, bevorzugt Propanphosphonsäure-dichlorid, Äthan-phosphonsäure-dichlorid, Chlormethan-phosphonsäure-dichlorid und besonders bevorzugt Methan-, Äthan- und n-Propan-phosphonsäure-dichlorid.

Es können selbstverständlich auch Mischungen verschiedener Verbindungen der Formel II eingesetzt werden.

Als Carbonsäureanhydride der allgemeinen Formel III sind z.B. geeignet :

Trichloressigsäure-anhydrid, Chloressigsäure-anhydrid, Buttersäure-anhydrid, bevorzugt Essigsäureanhydrid und insbesondere Propionsäureanhydrid, weil mit diesem letztgenannten Anhydrid die Bildung von dunkel gefärbten Nebenprodukten vermieden wird. Es können auch Mischungen verschiedener Carbonsäure-anhydride der Formel III verwendet werden.

Die Mol-Verhältnisse zwischen den Phosphin- und Phosphonsäure-halogeniden der Formel II und den aliphatischen Carbonsäureanhydriden der Formel III liegen zwischen ca. 1 : 0,8 und 1 : 10, vorzugsweise zwischen 1 : 0,95 und 1 : 3. Die Reaktionspartner werden zweckmäßigerweise bei Raumtemperatur unter Feuchtigkeits- und Luftausschluß miteinander vermischt und gemeinsam bei Normaldruck oder im leichten Vakuum hochgeheizt. Es kann aber auch zunächst die Komponente II hochgeheizt und dann die Komponente III zugetropft werden und umgekehrt. Die Reaktionstemperaturen liegen bei 30 bis 160 °C, bevorzugt bei 60 bis 130 °C. Um eventuelle Verfärbungen zu vermeiden, empfiehlt es sich, bei solchen Halogeniden, die nicht sofort schon bei 90-110 °C unter Abspaltung von Carbonsäurehalogeniden reagieren, Temperaturen von 90-110 °C zunächst nicht überschreiten. Die Reaktionszeit setzt auch bei weniger reaktionsfähigen Halogeniden der Formel I schon bei 80-110 °C langsam ein. Bei der Verwendung von Essigsäureanhydrid tritt dabei nach ca. 10 bis 300 Minuten, bevorzugt 30 bis 120 Min. in immer stärkerem Maße ein Rückfluß von Acetylchlorid (Kp. 51 °C) auf. Es

empfiehlt sich, erst wenn dieser Rückfluß stark genug ist und dadurch auch die Innentemperatur des Reaktionsgemisches abfällt, das entstandene Acetylchlorid gegebenenfalls über eine Kolonne abzudestillieren. Man kann aber auch das Acetylchlorid in dem Maße, wie es entsteht, sofort über eine Kolonne abdestillieren. Die Reaktionszeiten inklusive Abdestillieren des Carbonsäurechlorids können je nach Art der Halogenide der Formel II schwanken zwischen 10 Minuten und 20 Stunden, vorzugsweise zwischen einer und 8 Stunden.

Wurde ein Überschuß an Carbonsäureanhydriden der Formel III angewandt, so muß er nach dem Abdestillieren der tiefer siedenden Carbonsäurehalogenide ebenfalls destillativ entfernt werden. Zweckmäßigerweise sollte dies im guten Vakuum bei möglichst niederen Innentemperaturen geschehen, um Verfärbungen zu vermeiden.

Die als Destillationsrückstände zurückbleibenden Phosphin- und Phosphonsäure-anhydride fallen in reinem Zustand und in praktisch quantitativen Ausbeuten an. Dies gilt besonders dann, wenn das Carbonsäureanhydrid in mehr oder weniger großen Überschüssen angewandt und die überschüssigen Mengen sorgfältig destillativ entfernt werden. Saure Katalysatoren, wie z.B. Zinntetrachlorid, Aluminiumchlorid oder Bortrifluorid-Aetherat beschleunigen die Reaktion. Sie führen jedoch zu Verunreinigungen und z.T. auch zu unerwünschten Verfärbungen, so daß ihr Einsatz von Fall zu Fall überprüft werden sollte. Bemerkenswert am vorliegenden Verfahren ist die Tatsache, daß keine Mischanhydride aus den phosphorhaltigen Säuren und den Carbonsäuren entstehen.

Die bei dem vorliegenden Verfahren anfallenden phosphorhaltigen Anhydride stellen bedeutsame Zwischenprodukte dar. Durch einfache Umsetzungen, z.B. mit Äthylenoxid, können wertvolle Flammhemmittel gewonnen werden, wie sie z.B. in der DOS 27 26 478 beschrieben sind. Andere einfache Umsetzungen, wie z.B. mit Wasser zu den entsprechenden phosphorhaltigen Säuren, führen zu wichtigen phosphorhaltigen Zwischen- und Endprodukten, die z.B. auf dem Gebiet der Farbstoffe, Färbereihilfsmittel und Korrosionsschutzmittel in breitem Umfang eingesetzt werden.

## Beispiel 1

200 g (1,24 Mol) Propanphosphonsäuredichlorid und 126,5 g (1,24 Mol) Essigsäureanhydrid werden vermischt und unter Rühren auf 100-120 °C erhitzt. Nach einer Stunde beginnt über eine Kolonne Acetylchlorid abzudestillieren. Nach 7 Stunden sind 176 g Acetylchlorid abdestilliert. Anschließend wird bei 30 Torr bis zu einer Innentemperatur von 120 °C abdestilliert. In einer gekühlten Vorlage sammeln sich 19 g Acetylchlorid (176 + 19 g = 195 g = 2,48 Mol). Es verbleiben 132 g Propanphosphonsäureanhydrid mit einem Chloridgehalt 0,3 %. Das entspricht einer Ausbeute von 100 % d.Th.

## Beispiel 2

200 g (1,24 Mol) Propanphosphonsäuredichlorid und 253 g (2,48 Mol) Essigsäureanhydrid werden vermischt und unter Rühren auf 100-115 °C erhitzt. Nach einer Stunde beginnt über eine Kolonne Acetylchlorid abzudestillieren. Nach 4,5 Stunden sind 176 g Acetylchlorid abdestilliert. Anschließend wird im Wasserstrahlvakuum andestilliert bis zu einer Innentemperatur von 100 °C. Überschüssiges Essigsäurechlorid destilliert ab. In einer der Pumpe vorgeschalteten Kühlfalle sammelt sich 19 g Acetylchlorid (176 + 19 g = 195 g = 2,48 Mol). Der Destillationsrückstand wird bei 2 Torr andestilliert bis zu einer Innentemperatur von 150 °C. Es verbleiben 131,5 g Propanphosphonsäureanhydrid, frei von Chlorid. Das entspricht einer Ausbeute von 100 % d.Th.

Arbeitet man in der gleichen Weise, jedoch mit einem Zusatz von 1 % Zinntetrachlorid oder 0,5 % Bortrifluorid-Ätherat als Katalysator, so wird die Reaktion wesentlich beschleunigt und alles Acetylchlorid ist bereits nach 2 Stunden abdestilliert. Der Destillationsrückstand ist in diesem Fall jedoch stark verfärbt.

## Beispiel 3

210 g (1,035 Mol) n-Hexanphosphonsäuredichlorid und 211 g (2,07 Mol) Essigsäureanhydrid werden vermischt und unter Rühren erhitzt auf 90-100 °C. Nach 40 Minuten beginnt über eine Kolonne Acetylchlorid abzudestillieren. Im Verlaufe von 3 Stunden wird die Innentemperatur auf 120 °C gesteigert. Insgesamt sind dann 137 g Acetylchlorid abdestilliert. Nun wird das überschüssige Essigsäureanhydrid abdestilliert im Wasserstrahlvakuum bis zu einer Innentemperatur von 100 °C. In einer der Pumpe vorgeschalteten Kühlfalle sammeln sich 26 g Acetylchlorid (137 g + 26 g = 163 g = 2,07 Mol). Der Destillationsrückstand wird bei 2 Torr andestilliert bis zu einer Innentemperatur von 120 °C. Es verbleiben 154 g n-Hexannphosphonsäureanhydrid, frei von Chlorid. Das entspricht einer Ausbeute von 100 % d.Th.

## Beispiel 4

126 g (1 Mol) Äthylmethylphosphinsäurechlorid und 102 g (1 Mol) Essigsäureanhydrid werden vermischt und unter Rühren auf 90 °C erhitzt. Es destilliert über eine Kolonne Acetylchlorid ab. Nach 2 Stunden sind bei einer gleichzeitigen allmählichen Steigerung der Innentemperatur auf 120 °C 60 g Acetylchlorid abdestilliert. Zum Schluß wird im Wasserstrahlvakuum andestilliert zur Entfernung

überschüssigen Essigsäureanhydrids bis zu einer Innentemperatur von 120 °C. In einer der Pumpe vorgeschalteten Kühlfalle verbleiben 19 g Acetylchlorid (60 g + 19 g = 79 g = 1 Mol). Anschließend wird bei 1 Torr andestilliert bis zu einer Innentemperatur von 135 °C. Es verbleiben 900 g Äthylmethylphosphinsäureanhydrid, frei von Chlorid. Das entspricht einer Ausbeute von 100 % d.Th.

Beispiel 5

100 g (0,805 Mol) Methylvinylphosphinsäurechlorid und 164 g (1,61 Mol) Essigsäureanhydrid werden gemischt und unter Rühren auf 100 °C erhitzt. Es destilliert über eine Kolonne Acetylchlorid ab. Die Temperatur wird während 2 Stunden auf 120 °C allmählich gesteigert. Dabei destillieren 46 g Acetylchlorid ab. Dann wird im Wasserstrahlvakuum andestilliert zur Entfernung des überschüssigen Essigsäureanhydrids bis zu einer Innentemperatur von 120 °C. In einer der Pumpe vorgeschalteten Kühlfalle verbleiben 17 g Acetylchlorid (46 g + 17 g = 63 g = 0,805 Mol). Anschließend wird bei 2 Torr andestilliert bis zu einer Innentemperatur von 130 °C. Es verbleiben 79 g Methylvinylphosphinsäureanhydrid, frei von Chlorid. Das entspricht einer Ausbeute von 100 % d.Th.

Beispiel 6

143 g (0,735 Mol) Benzolphosphonsäuredichlorid und 149,5 g (1,47 Mol) Essigsäureanhydrid werden vermischt und unter Rühren auf 90-115 °C erhitzt. Nach 1 Stunde beginnt Acetylchlorid über eine Kolonne abzudestillieren. Nach weiteren 3 Stunden ist die Abdestillation des Acetylchlorids beendet. Anschließend wird im Wasserstrahlvakuum abdestilliert bis zu einer Innentemperatur von 130 °C, danach bei 2 Torr bis zu einer Innentemperatur von 120 °C. Es verbleiben 103 g Benzolphosphonsäureanhydrid, frei von Chlorid. Das entspricht einer Ausbeute von 100 % d.Th.

Beispiel 7

44,4 g (0,2 Mol) 1,2-Äthan-bis-(methyl-phosphinsäure-chlorid) und 40,8 g (0,4 Mol) Essigsäureanhydrid werden auf 80 °C erhitzt. Dabei tritt schon nach 10 Minuten ein intensiver Rückfluß von Acetylchlorid auf. Es werden innerhalb einer Stunde 25 g (0,319 Mol) Acetylchlorid abdestilliert. Es wird ein Vakuum von zunächst 120, später von 30 mbar angelegt und die Innentemperatur bis auf 153 °C gesteigert. Dabei destillieren weitere 6 g (0,077 Mol) an Acetylchlorid und 20 g Essigsäureanhydrid in eine Kältefalle ab. Es hinterbleiben 34 g an glasartigem chlorfreiem 1,2-Äthan-bis-(methyl-phosphinsäure)-anhydrid. (Theorie = 33,6 g).

Beispiel 8

59,0 g (0,2 Mol) Tetradecyl-methyl-phosphinsäurechlorid und 51 g (0,5 Mol) Essigsäureanhydrid werden auf 80 °C erhitzt. Bereits nach 20 Minuten entsteht Acetylchlorid. Es werden davon innerhalb von 60 Minuten 13 g (0,166 Mol) abdestilliert. Nach Anlegen eines Vakuums von 20 mbar werden weitere 2,5 g (0,032 Mol) Acetylchlorid und 30 g Essigsäureanhydrid in eine Kältefalle abdestilliert. Es hinterbleiben 53 g (Theorie = 53,4 g) von chlorfreiem Tetradecyl-methyl-phosphinsäure-anhydrid.

Beispiel 9

83,7 g (0,5 Mol) Chlormethanphosphonsäuredichlorid und 61,2 g (0,6 Mol) Essigsäureanhydrid werden auf 60 °C erhitzt. Sofort tritt bei einer Innentemperatur von 55-57 °C ein Rückfluß von Acetylchlorid auf. Nach einer Stunde wird das gebildete Acetylchlorid zunächst bei Normaldruck und dann bei 40 mbar größtenteils abdestilliert. Durch Anlegen eines Vakuum von 1 mbar werden bei 75 °C weitere 5 g Acetylchlorid und 10 g Essigsäureanhydrid entfernt. Es hinterbleiben 55 g (= ca. 98 % d.Th.) an Chlormethanphosphonsäureanhydrid, Frei von Chloridionen.

Beispiel 10

72,5 g (0,5 Mol) Vinylphosphonsäuredichlorid und 61,2 g (0,6 Mol) Essigsäureanhydrid werden auf 107 °C erhitzt. Dabei tritt leichter Rückfluß von Acetylchlorid auf. Nach 5 Stunden ist die Innentemperatur wegen der immer stärker werdenden Bildung von Acetylchlorid auf 60 °C abgesunken. Nach Abdestillieren des Hauptteils (76 g) des gebildeten Acetylchlorids zunächst bei Normaldruck dann bei 35 mbar und Abziehen des Restes an Acetylchlorid (2 g) und des überschüssigen Essigsäureanhydrids (10 g) bei 1 mbar und 90 °C hinterbleiben 46 g von chloridfreiem Vinylphosphonsäureanhydrid (Th. = 45 g).

Beispiel 11

61,5 g (0,5 Mol) Methanphosphonsäuredichlorid und 61,2 g (0,6 Mol) Essigsäureanhydrid werden auf 75 °C erhitzt. Dabei tritt ein Rückfluß von Acetylchlorid auf. Nach 150 Min. ist die Innentemperatur wegen

der stärker werdenden Bildung von Acetylchlorid auf 58 °C abgefallen. Nach Abdestillieren aller flüchtigen Anteile zunächst bei Normaldruck, dann bei 30 mbar und schließlich bei 1 mbar und Innentemperaturen von 60-80 °C hinterbleiben als Rückstand 38 g (Theorie = 39 g) chloridfreies Methanphosphonsäureanhydrid.

Beispiel 12

64,4 g (0,6 Mol) Propanphosphonsäuredichlorid und 65,1 g (0,5 Mol) Propionsäureanhydrid werden auf 100 °C erhitzt. Nach 20 Minuten setzt kräftiger Rückfluß von Propionsäurechlorid (Kp. 80 °C) ein. Es wird noch 1 Stunde nacherhitzt. Dabei fällt die Innentemperatur wegen des immer stärkeren Rückfluß auf 88 °C ab. Über eine kleine Kolonne werden bei bis zu 105 °C 58 g (0,60 Mol) Propionsäurechlorid abdestilliert. Es werden ein Wasserstrahlvakuum von 28 mbar angelegt und bei Temperaturen bis 150 °C weitere 10 g Propionsäurechlorid (0,108 Mol) und in eine Kältefalle und 6 g Propionsäurechlorid (0,065 Mol) und 11,5 g (0,088 Mol) Propionsäureanhydrid in die Destillationsvorlage destilliert. Durch Anlegen eines Ölpumpenvakuums von 1 mbar bei 150 °C werden noch weitere 1,5 g (0,011 Mol) Propionsäureanhydrid abgezogen. Es hinterbleiben 42,5 g (Th. = 42,4 g) an chlorfreiem Propanphosphonsäureanhydrid.

## Anspruch

Verfahren zur Herstellung von Phosphin- und Phosphonsäureanhydriden der Formel

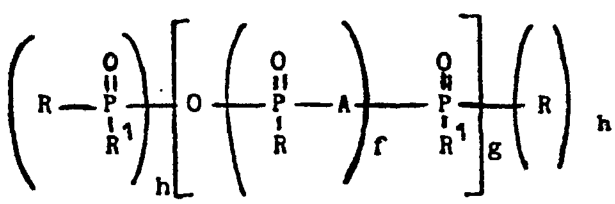

(I)

wobei

A Alkylen, Aralkylen oder Arylen mit jeweils 1-10 C-Atomen

$R_1$ $C_1$-$C_8$-Alkyl,

$R^1$ $C_1$-$C_{18}$-Alkyl oder Alkenyl, das durch Fluor, Chlor oder Brom substituiert und durch Äthersauerstoffatome unterbrochen sein kann ; Cycloalkyl oder Alkylcycloalkyl mit jeweils insgesamt 1-10 C-Atomen ; Aryl oder Alkylaryl, die im Ring durch Chlor und/oder Brom substituiert sein können ;

f = 0 oder 1, bevorzugt 0, stets 0, wenn h = 1 ;

g = 1, wenn h = 1 oder wenn h = 0, f = 1 und A = $C_3H_6$ sind,

g = 3 bis formal unendlich, wenn h und f = 0 und

g = 2 bis formal unendlich, wenn h = 0, f = 1 und A nicht $C_3H_6$ ist und

h = 0 oder 1, bevorzugt 0 bedeuten, dadurch gekennzeichnet, daß man ein Mol einer Verbindung der Formel

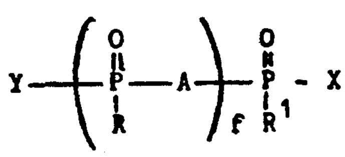

(II)

wobei X Chlor oder Brom, vorzugsweise Chlor bedeutet Y die gleiche Bedeutung wie R hat und zusätzlich die gleiche Bedeutung wie X hat und R, $R^1$, A und f die gleichen Bedeutungen wie in der Formel I haben, mit mindestens b/2 Mol eines aliphatischen Carbonsäureanhydrides der Formel

$$(R^2—CO—)_2—O \qquad (III)$$

umsetzt, wobei b die Anzahl der Halogenatome in der Verbindung der Formel II und $R^2$ $C_1$-$C_3$-Alkyl, Chlormethyl, Dichlormethyl oder Trichlormethyl, bevorzugt $CH_3$ oder $C_2H_5$, bedeutet, und die als Nebenprodukte entstehenden Carbonsäurehalogenide destillativ entfernt.

**Claim**

Process for the manufacture of phosphinic and phosphonic acid anhydrides of the formula

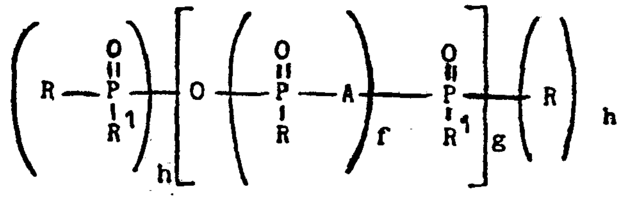

(I)

in which

A stands for alkylene, aralkylene or arylene with 1 to 10 carbon atoms each,

R is $C_1$-$C_8$-alkyl,

$R^1$ is $C_1$-$C_{18}$-alkyl or alkenyl which may be substituted by fluorine, chlorine or bromine and may be interrupted by ether oxygen atoms ; cycloalkyl or alkylcycloalkyl of a total of 1 to 10 carbon atoms each ; aryl or alkylaryl optionally being substituted in the ring by chlorine and/or bromine ;

f is 0 to 1, preferably 0, and always 0 if h is 1 ;

g is 1, if h is 1, or if h is 0, f is 1 and A is $C_3H_6$ ;

g is 3 to formally infinite, if h and f are 0, and

g is 2 to formally infinite, if h is 0, f is 1 and A is other than $C_3H_6$, and

h is 0 or 1, preferably 0, which comprises reacting one mol of a compound of the formula

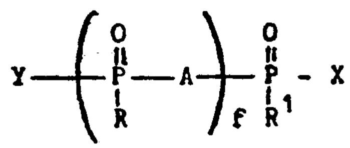

(II)

in which X is chlorine or bromine, preferably chlorine, Y is defined as R and is additonally defined as X, and R, $R^1$, A and f are defined as in the above formula I, with at least b/2 mol(s) of an aliphatic carboxylic acid anhydride of the formula

$$(R^2—CO—)_2—O \qquad (III)$$

b being the number of the halogen atoms in the compound of the formula II and $R^2$ being $C_1$-$C_3$-alkyl, chloromethyl, dichloromethyl or trichloromethyl, preferably $CH_3$ and $C_2H_5$, and removing the carboxylic acid halides being formed as by-products by distillation.

**Revendication**

Procédé de préparation d'anhydrides d'acides phosphiniques ou phosphoniques de formule générale

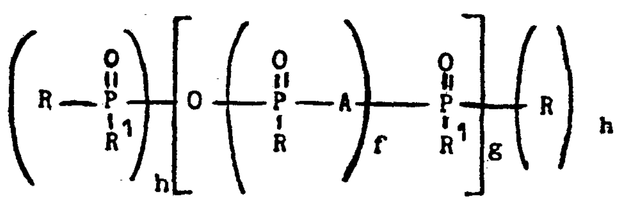

(I)

dans laquelle

A représente un alkylène, un aralkylène ou un arylène, chacun en $C_1$-$C_{10}$,

R un alkyle en $C_1$-$C_8$,

$R^1$ un alkyle en $C_1$-$C_{18}$ ou un alcényle pouvant être fluoré, chloré ou bromé et interrompu par des

atomes d'oxygène en liaison éther ; un cycloalkyle ou un alkyl-cycloalkyle ayant chacun au total de 1 à 10 atomes de carbone ; un aryle ou un alkylaryle pouvant être chloré et/ou bromé sur le cycle ;

f = 0 ou 1, de préférence 0, et toujours 0 si h = 1 ;

g = 1 si h = 1, ou si h = 0, f = 1 et A = $C_3H_6$ ;

g = 3 à théoriquement l'infini si h et f = 0, et

g = 2 à théoriquement l'infini si h = 0, f = 1 et A n'est pas le radical $C_3H_6$ ; et

h = 0 ou 1, de préférence 0, procédé caractérisé en ce que l'on fait réagir une mole d'un composé de formule

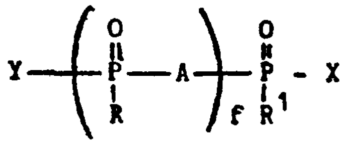

(II)

(X désignant le chlore ou le brome, de préférence le chlore, Y ayant la même signification que R et de plus la même signification que X, et R, $R^1$, A et f ayant les mêmes significations que dans la formule I) avec au moins b/2 mole d'un anhydride d'acide carboxylique aliphatique de formule

$$(R^2\text{—CO—})_2\text{—O} \qquad \text{(III)}$$

(b étant le nombre des atomes d'halogènes du composé de formule II et $R^2$ désignant un alkyle en $C_1$-$C_3$, un chlorométhyle, un dichlorométhyle ou un trichlorométhyle, de préférence le groupe $CH_3$ ou $C_2H_5$), et on élimine par distillation l'halogénure d'acide carboxylique formé comme sous-produit.